# EUROPÄISCHE PATENTANMELDUNG

(11) **EP 1 118 779 A2**
(43) Veröffentlichungstag der Anmeldung: **25.07.2001**
(21) Anmeldenummer: 00126372.2
(22) Anmeldetag: 02.12.2000
(51) Int. Cl.: F16C 9/02

(54) **Geteilte Lageranordnung**

(30) Priorität: 18.01.2000 DE 10001780
(71) Anmelder: Bayerische Motoren Werke Aktiengesellschaft, 80809 München (DE)
(72) Erfinder: Luchner, Clemens, 85598 Baldham (DE)

(57) **Zusammenfassung**

Die Erfindung betrifft ein Maschinengehäuse (2) mit einer geteilten Lageranordnung (1). Sowohl Lagerstuhl (4) als auch Lagerdeckel (5) sind aus Leichtmetall gefertigt und verfügen über korrespondierende Spannflächen (6; 6'). Die Spannfläche des Lagerdeckels (6) hat zumindest bereichsweise schneidenartige Profile (7). Bei der Montage des Maschinengehäuses drücken die schneidenartigen Profile (7) in die korrespondierende Spannfläche des Lagerstuhls (6'), wodurch eine formschlüssige Verbindung entsteht, die Lagerquerkräfte aufnehmen kann und gleichzeitig zur eindeutigen Positionierung des Lagerdeckels bei wiederholter Montage dient. Durch Zugabe von Verstärkungsstoffen in das Lagerdeckelmaterial wird der Lagerdeckel (5) derart verstärkt, dass der Eindrückvorgang durchführbar ist. Ein Anwendungsbeispiel sind geteilte Gleitlager wie sie zur Kurbelwellenlagerung in Brennkraftmaschinen, speziell mit Zylindern in V-Anordnung, eingesetzt sind.

## Beschreibung

Die Erfindung betrifft eine Vorrichtung der im Oberbegriff des Patentanspruchs 1 genannten Art.

Eine derartige Lageranordnung ist beispielsweise aus der deutschen Offenlegungsschrift 198 19 081 bekannt, wobei der Lagerdeckel aus einem harten Eisenmaterial und der Lagerstuhl, wie auch das Maschinengehäuse, aus einem weicheren Leichtmetallwerkstoff aufgebaut ist. Die schneidenartigen Profile auf der Spannfläche des Lagerdeckels werden durch spanabhebende Bearbeitung beziehungsweise durch Erodieren hergestellt. Bevorzugt werden diese schneidenartigen Profile parallel zur Lagermittelachse auf zumindest einer Spannfläche durch die Bearbeitung erzeugt. Beim erstmaligen Verspannen von Lagerdeckel und Lagerstuhl drücken sich die harten Schneiden in die korrespondierende weiche Spannfläche und bilden einen Formschluß, der die im Betrieb auftretenden Lagerquerbelastungen aufnimmt.

Nachteilig bei dieser Werkstoffauswahl ist, dass ein konsequenter Leichtbau des Maschinengehäuses wegen des aus einem gegenüber Leichtmetall schwereren Eisenwerkstoff hergestellten Lagerdeckels nicht darstellbar ist. Darüber hinaus ist eine Nachbearbeitung der Lagerdeckel-Spannfläche zur Erzeugung der schneidenartigen Profile durch spanende Nachbearbeitung oder durch Erodieren teuer und aufwendig.

Der Erfindung liegt die Aufgabe zugrunde, ein Maschinengehäuse mit einer geteilten Lageranordnung aufzuzeigen, das leicht ist und gleichzeitig Querbelastungen aufnimmt.

Erfindungsgemäß ist die Aufgabe durch die Merkmale des Patentanspruch 1 gelöst. Durch die Erfindung ist ein konsequenter Leichtbau der Lageranordnung realisiert, der zur Reduzierung des Gesamtgewichts der Brennkraftmaschine beiträgt. Aufgrund der Verstärkung in den am stärksten mechanisch belasteten Bereichen des Lagerdeckels, ist trotz der Verwendung von Leichtmetall die maximale Festigkeit und somit minimale Deformation des Lagerdeckels bei geringen Querschnitten erreicht. Ein bevorzugtes Anwendungsgebiet der Erfindung ist die Ausführung von Gleitlagern in Brennkraftmaschinen, speziell mit Zylindern in V-Anordnung.

Zweckmäßig ist die Verstärkung des Lagerdeckels aus einem Leichtmetall wie Aluminium oder Magnesium durch Zumischung von Verstärkungsmaterialien wie oxidkeramischen, nitridkeramischen oder karbidischen Partikeln - Karbidische Verstärkung durch SiC oder B₄C - beziehungsweise oxidkeramischen, nitridkeramischen oder karbidischen Kurzfasern zu der Leichtmetallschmelze, beziehungsweise Pulver für gesinterte Lagerdeckel. Zumindest die Bereiche der Spannflächen und der Verschraubungsbohrungen werden mit einem Verstärkungsmaterial verstärkt. Dies gewährleistet, dass sich die schneidenartigen Profile auf den Spannflächen des Lagerdeckels bei der ersten Montage des Maschinengehäuses zur Ausbildung einer formschlüssigen Verbindung in die weichen Spannflächen des Lagerstuhls drücken. Ferner wird der Lagerdeckel bei seiner Verschraubung mit dem Lagerstuhl durch die Schraubenandruckkräfte nicht deformiert. Die eingebrachten Partikel oder Kurzfasern weisen bei geringer spezifischer Dichte höchste Festigkeit oder Materialhärte in Verbindung mit dem Leichtmetall auf. Weiter ist der dem Stahl ähnliche Wärmeausdehnungskoeffizient des Verbundstoffes vorteilhaft, da temperaturbedingter Lagerverzug und somit das Betriebslagerspiel minimiert ist.

Den gleichen Vorteil bietet eine weitere bevorzugte Variante nach Anspruch 5, bei der zur Verstärkung des Lagerdeckels eine Preform in diesen eingegossen ist. Preform ist ein Grundgerüst oder Kern aus beispielsweise keramischem Material, der mit Leichtmetall infiltriert / durchtränkt und bei hochbeanspruchten Bauteilen, wie beispielsweise Lagerdeckel verwendet wird.

Bei einer Weiterbildung der gerade genannten Ausführungsform für ein Gleitlager, bleibt der Bereich der Gleitlagerbohrung von der harten Preform ausgenommen. Dies erleichtert eine spätere Lagerbearbeitung, da nur weiches Leichtmetall spanend bearbeitet wird. Diese unverstärkte Lagerbohrung kann als Lagerfunktionsfläche verwendet werden.

Eine weitere Ausführungsform ist die Materialverstärkung durch die Ausscheidung von Siliziumkristallen aus der Primärphase der Leichtmetallschmelze. Das bedeutet, dass der hohe Siliziumanteil (größer 16 Volumen%) im Leichtmetall, eine übereutektische Legierung, beim Erstarren des Leichtmetalls aus der Schmelze, in Form von Siliziumkristallen ausgeschieden wird. Die Zugabe von harten Materialien in die Leichtmetallschmelze entfällt somit. Der Lagerdeckel kann auch pulvermetallurgisch mit hohem Anteil an Siliziumpartikeln hergestellt werden.

Ein weiterer Vorteil bei oben genannten Fertigungsverfahren liegt darin, dass die schneidenartigen Profile mit einem Gießverfahren wie dem Druckgußverfahren, bei Infiltration von Preformen im Vakuum, oder aufpulvermetallurgischem Weg spanlos, das heisst ohne spanende Nachbearbeitung, erzeugbar sind.

Durch Zusammenfassung mehrerer Lagerdeckel Preformen sind diese mittels eines Gußverfahrens, zu einem Bedplate vergießbar.

Die eine beigefügte Zeichnung zeigt ein bevorzugtes Ausführungsbeispiel der Erfindung.

Eine geteilte Lageranordnung 1 in einem Maschinengehäuse 2 für ein Kurbelwellengleitlager 3 in einer nicht dargestellten Brennkraftmaschine besteht aus einem Lagerstuhl 4 und einem Lagerdeckel 5. Der Lagerstuhl 4 und der Lagerdeckel 5 verfügen über korrespondierende Spannflächen 6 und 6'. Die Spannflächen 6 des Lagerdeckels 5 verfügen über ein schneidenartiges Profil 7, das parallel zur Lagermittelachse verläuft. Die korrespondierenden Spannflächen des Lagerstuhls 4 sind plan. Im Lagerdeckel 5 sind Bohrungen 8; 8' zur Verschraubung von Lagerdeckel 5 mit Lagerstuhl 4 vorgesehen. Beim erstmaligen Verschrauben der Lageranordnung 1, mit Hilfe von hier nicht dargestellten Schrauben, die durch die Bohrungen 8; 8' im Lagerdeckel in den Lagerstuhl 4 eingreifen, drückt das schneidenartige Profil 7 im Lagerdeckel 5 zu dem schneidenartigen Profil 7 korrespondierende Vertiefungen 9 in die Spannflächen 6' des Lagerstuhls 4.

Dieser nach dem ersten Verspannen der Lageranordnung 1 entstandene Formschluß nimmt im Betrieb auftretende Lagerquerbelastungen auf und dient als Repositionierungshilfe beim Wiederzusammenbau des Lagers nach einer Demontage.

Um das Eindrücken des schneidenartigen Profils 7 des Lagerdeckels 5 in den Lagerstuhl 4 zu ermöglichen, - beide sind aus Leichtmetall gefertigt - ist in der Erfindung vorgeschlagen, das Lagerdeckelmaterial des Lagerdeckels 5 härter als den Rest der Lageranordnung 1 auszuführen. Durch diese Maßnahme ist der Einpreßvorgang des Lagerdeckels 5 in den Lagerstuhl 4 sichergestellt. Die Lagerdeckelverstärkung wird durch die Zugabe von oxidkeramischen, nitridkeramischen oder karbidischen Partikeln beziehungsweise oxidkeramischen, nitridkeramischen oder karbidischen Kurzfasern zur Leichtmetallschmelze erreicht.

Die Herstellung des Lagerdeckels 5 geschieht durch ein Druckgußverfahren, bei dem das schneidenartige Profil 7 in einem Herstellungsarbeitsgang mit dem Lagerdeckel 5 erzeugt wird Weitere mögliche, hier nicht dargestellte Varianten zur Verstärkung des Lagerdeckels 5 sind die Verwendung einer übereutektischen Leichtmetalllegierung beziehungsweise pulvermetallurgische Herstellung oder das Eingießen von zumindest einer Preform, die in verschiedenen Ausführungen einbringbar ist. Sie ist
■ ganz eingegossen, das heisst, die Gleitlageroberfläche ist im Bearbeitungsbereich des Gleitlagers aus Leichtmetall;
■ im Bereich der Gleitlageroberfläche nicht von Leichtmetall bedeckt, dafür ist ein weicher Werkstoff auf die Preform aufbringbar, der wiederum als Gleitlagermaterial einsetzbar ist;
■ zur Erleichterung der Bearbeitbarkeit gegebenenfalls im Bohrungsbereich der Schrauben unverstärkt.

### Bezugszeichenliste:

- 1: geteilte Lageranordnung
- 2: Maschinengehäuse
- 3: Kurbelwellengleitlager
- 4: Lagerstuhl
- 5: Lagerdeckel
- 6; 6': Spannfläche
- 7: schneidenartiges Profil
- 8; 8': Verschraubungsbohrungen
- 9: Vertiefungen

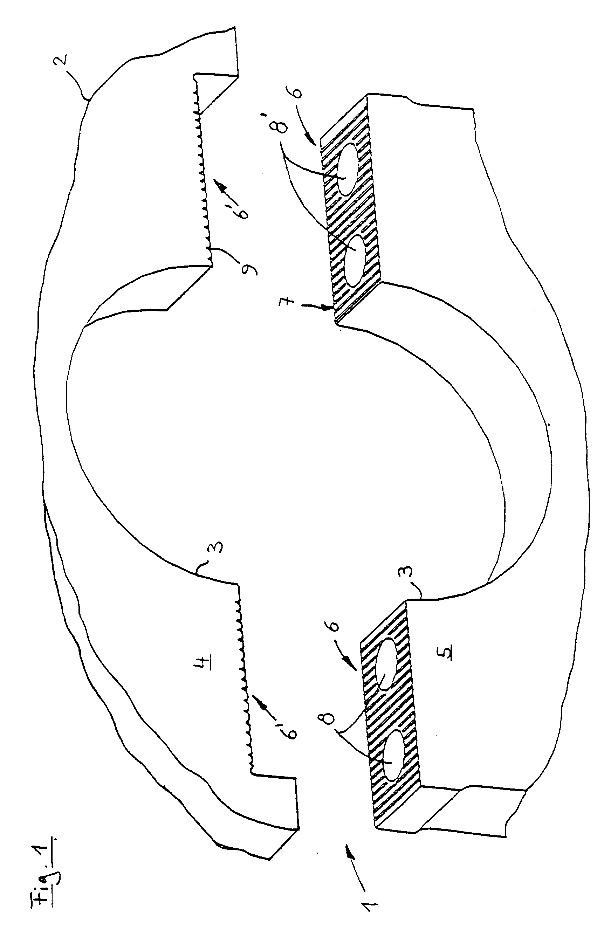

## Patentansprüche

1. Maschinengehäuse (2) mit einem Lagerstuhl (4) aus Leichtmetall mit einer geteilten Lageranordnung (1), insbesondere ein Gleitlager im Kurbelgehäuse einer Brennkraftmaschine, bestehend aus einem Lagerdeckel (5), der gegen den Lagerstuhl (4), durch zumindest bereichsweise schneidenartige Profile (7) auf den Spannflächen (6), formschlüssig verschraubt ist, dadurch gekennzeichnet, dass der Lagerdeckel (5) aus Leichtmetall und mindestens im Bereich der Spannflächen (6) und der Verschraubungsbohrungen (8; 8') mit einem harten Verstärkungsmaterial verstärkt ist.

2. Lageranordnung nach Anspruch 1 dadurch gekennzeichnet, dass der Verstärkungsstoff aus oxidkeramischen, nitridkeramischen oder karbidischen Partikeln beziehungsweise aus oxidkeramischen, nitridkeramischen oder karbidischen Kurzfasern darstellbar ist.

3. Lageranordnung nach Ansprüchen 1 und 2 dadurch gekennzeichnet, dass der Anteil von Verstärkungsstoff am Leichtmetall 20 bis 80 Volumen% beträgt.

4. Lageranordnung nach Ansprüchen 1 bis 3 dadurch gekennzeichnet, dass die Länge der Kurzfasern den 20 bis 150fachen Wert ihres Durchmessers beträgt.

5. Lageranordnung nach Anspruch 1 dadurch gekennzeichnet, dass die Verstärkung durch zumindest eine, in den Lagerdeckel (5) eingegossene Preform erzeugbar ist.

6. Lageranordnung nach Ansprüchen 1 und 5 dadurch gekennzeichnet, dass der Bereich der Gleitlagerbohrung von dieser Preform unverstärkt ist.

7. Lageranordnung nach Ansprüchen 5 und 6 dadurch gekennzeichnet, dass der von der Preform unverstärkte Bereich der Gleitlagerbohrung mit Leichtmetall umgießbar ist.

8. Lageranordnung nach Ansprüchen 5 und 6 dadurch gekennzeichnet, dass auf den von der Preform unverstärkten Bereich der Gleitlagerbohrung Gleitlagermaterial aufbringbar ist.

9. Lageranordnung nach Anspruch 1 dadurch gekennzeichnet, dass die Verstärkung durch eine Ausscheidung von bis zu 20 Volumen% an Siliziumkristallen aus der Primärphase der Leichtmetallschmelze erreichbar ist.

10. Lageranordnung nach Anspruch 1 dadurch gekennzeichnet, dass die schneidenartigen Profile (7) mit einem Gießverfahren erzeugbar sind.

11. Lageranordnung nach Anspruch 1 dadurch gekennzeichnet, dass der Lagerdeckel (5) pulvermetallurgisch herstellbar ist.

12. Lageranordnung nach Ansprüchen 1 und 11 dadurch gekennzeichnet, dass mehrere Lagerdeckel (5) zu einem Bedplate zusammenfaßbar sind.
